(19) Europäisches Patentamt
European Patent Office
Office européen des brevets

(11) **EP 4 631 924 A1**

(12) **DEMANDE DE BREVET EUROPEEN**

(43) Date de publication:
**15.10.2025 Bulletin 2025/42**

(21) Numéro de dépôt: **25169973.2**

(22) Date de dépôt: **11.04.2025**

(51) Classification Internationale des Brevets (IPC):
***C04B 7/12*** *(2006.01)*

(52) Classification Coopérative des Brevets (CPC):
(C-Sets disponibles)
**C04B 7/12** (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **12.04.2024 FR 2403822**

(71) Demandeur: **CB Green**
**62250 Leulinghen-Bernes (FR)**

(72) Inventeurs:
• **SLOMA, Philippe**
**62250 LEULINGHEN BERNES (FR)**
• **MEDALA, Marta**
**62250 LEULINGHEN BERNES (FR)**
• **SCHMID, Christelle**
**62250 LEULINGHEN BERNES (FR)**

(74) Mandataire: **Lavoix**
**2, place d'Estienne d'Orves**
**75441 Paris Cedex 09 (FR)**

(54) **PRÉPARATION D'UNE CHARGE MINÉRALE ARGILO-SILICO-CALCAIRE**

(57)     La présente invention concerne un procédé de préparation d'une charge minérale argilo-silico-calcaire, comprenant les étapes suivantes :
- une étape de mesure de la teneur en kaolinite dans une composition aqueuse d'eaux de lavage issues de procédés de lavage de matières minérales, notamment issues de procédés de lavage de matériaux calcaires, ladite étape étant caractérisée en ce qu'elle est effectuée par spectrométrie proche infrarouge ;

- une étape de filtration de ladite composition aqueuse, si la teneur mesurée à l'étape précédente est supérieure ou égale à 8% massique, de préférence supérieure ou égale à 10% massique par rapport à la masse totale de ladite composition aqueuse, pour obtenir un gâteau de filtration ; et
- une étape d'émottage puis de séchage du gâteau de filtration obtenu à l'issue de l'étape de filtration, pour obtenir une charge minérale argilo-silico-calcaire.

EP 4 631 924 A1

(52) Classification Coopérative des Brevets (CPC):
(Cont.)

C-Sets
**C04B 7/12, C04B 7/43, C04B 18/0418**

**Description**

La présente invention a pour objet un procédé de préparation d'une charge minérale argilo-silico-calcaire, ainsi qu'un procédé de préparation d'une composition d'argile calcinée.

Le domaine du BTP représente une part importante de l'activité économique de la France. La place conséquente de ce domaine et la construction / rénovation du parc constructif entraine une consommation continue et importante des ressources naturelles, un rejet non négligeable de $CO_2$ et une consommation importante d'énergie. La prise de conscience des pouvoirs publics quant à la réduction du rejet de gaz à effet de serre tend à améliorer les performances environnementales et énergétiques du domaine de la construction tant sur le plan des matériaux que sur la conception des ouvrages. Dans le secteur de la construction, l'augmentation du prix des matières premières, l'épuisement des ressources naturelles et les difficultés administratives d'ouverture de nouveaux sites carriers tendent à s'orienter vers des ressources alternatives tels que les granulats recyclés ou les co-produits industriels. Dans le domaine des co-produits industriels, les fines de lavage de carrières peuvent être considérées comme une ressource à fort potentiel de valorisation dans le domaine des éco-matériaux, de par leurs volumes importants et leur nature argileuse.

La plupart des granulats utilisés dans le domaine du BTP proviennent de carrières alluvionnaires ou massives. Pour satisfaire aux critères de qualité et de performances des matériaux et produits mis en place (béton, graves traitées...), les granulats ne doivent contenir qu'une faible quantité de fines argileuses afin de ne pas provoquer de problèmes d'adhérence, notamment entre la matrice cimentaire et les granulats pour le béton. De ce fait, des unités de lavage nettoient les granulats et leur ôtent les fines.

Pour les carrières alluvionnaires, les fines de lavage sont rejetées dans d'anciennes excavations dès la sortie des installations. L'exploitation d'une carrière massive nécessite quant à elle le minage et le remaniement du terrain naturel. La production de granulats entraine la production de sous-produits pouvant être non exploités et stockés comme les fines de lavage de carrières.

Or, ces fines demandent des capacités de stockage importantes et peuvent être un inconvénient quant à l'exploitation du gisement. En effet, les fines de lavage de granulats, en sortie du procédé, ont une concentration plus ou moins importantes dans l'eau (150 g/l à 750 g/l). Les eaux de lavage ne peuvent être déversées dans les nappes phréatiques en raison de ces concentrations excessives. Par conséquent, des bassins de décantation permettent de stocker ces boues afin de séparer l'eau des fines de lavage. Actuellement, les fines de lavage sont peu valorisées. L'augmentation de la production de granulats engendre des volumes conséquents de ces fines.

Il est donc nécessaire à ce jour, pour préserver les ressources en matériaux naturels, de trouver des voies de valorisation de ces fines argilo-silico-calcaires de lavage.

La présente invention a pour but de réduire les volumes de stockage des fines de boues de lavage mentionnées ci-dessus.

Le but de l'invention est alors de proposer un procédé permettant le recyclage des déchets de carrières, notamment des eaux de lavage contenant les fines argilo-silico-calcaires.

A cet effet, l'invention concerne un procédé de préparation d'une charge minérale argilo-silico-calcaire, comprenant les étapes suivantes :

- une étape de mesure de la teneur en kaolinite dans une composition aqueuse d'eaux de lavage issues de procédés de lavage de matières minérales, notamment issues de procédés de lavage de matériaux calcaires, ladite étape étant caractérisée en ce qu'elle est effectuée par spectrométrie proche infrarouge ;
- une étape de filtration de ladite composition aqueuse, si la teneur mesurée à l'étape précédente est supérieure ou égale à 8% massique, de préférence supérieure ou égale à 10% massique par rapport à la masse totale de ladite composition aqueuse, pour obtenir un gâteau de filtration ; et
- une étape d'émottage puis de séchage du gâteau de filtration obtenu à l'issue de l'étape de filtration, pour obtenir une charge minérale argilo-silico-calcaire.

Le procédé de l'invention est donc spécifiquement basé sur la mesure de la teneur en kaolinite par une étape de mesure par proche infrarouge. Or, à ce jour, cette méthode n'a jamais été utilisée dans ce contexte, et surtout il n'est pas usuel d'utiliser une telle méthode d'analyse pour des teneurs en kaolinite variables (gamme étendue de longueurs d'onde du spectromètre proche infrarouge (900 - 1700 nm)).

Le procédé de l'invention consiste donc dans un premier temps à mesurer la teneur en kaolinite dans une composition aqueuse d'eaux de lavage issues de procédés de lavage de matières minérales, notamment issues de procédés de lavage de matériaux calcaires.

Ces eaux (ou boues) de lavage sont chargées en composés « indésirables » pour certaines applications, également appelés fines de lavage ou fines argilo-silico-calcaires, et correspondent aux eaux obtenues et stockées après le lavage des cailloux calcaires.

Ces eaux de lavage sont donc sous forme d'une solution liquide, dans laquelle se trouvent différents minéraux, comme notamment l'argile, le calcaire ou la silice.

Selon un mode de réalisation, la composition aqueuse d'eaux de lavage utilisée dans le cadre de la présente invention comprend :

- de 8% à 45%, notamment de 12% à 40%, et de préférence de 15% à 36%, massique de $SiO_2$ par rapport à la masse totale de ladite composition aqueuse,
- de 1% à 20%, notamment de 3% à 15%, et de préférence de 6,5% à 15%, massique de $Al_2O_3$ par rapport à la masse totale de ladite composition aqueuse, et
- de 25% à 85%, notamment de 30% à 81%, notamment de 34% à 70%, et de préférence de 35% à 62%, massique de calcaire par rapport à la masse totale de ladite composition aqueuse.

D'autres minéraux peuvent être présents en faible quantité (goethite, dolomite, rutile, anatase, anorthite, smectite, chlorite 1A, interstratifiés illite/smectite et illite/chlorite).

De préférence, la composition aqueuse d'eaux de lavage présente une concentration de matières solides comprise de 100 g.L$^{-1}$ à 800 g.L$^{-1}$, de préférence de 110 g.L$^{-1}$ à 780 g.L$^{-1}$. Par matières solides, on entend les minéraux susmentionnés, notamment calcaire, kaolinite, quartz etc...

Comme indiqué plus haut, la première étape du procédé est une étape de mesure de la teneur en kaolinite par proche infrarouge.

Cette étape est effectuée par exemple au moyen d'un spectromètre proche infrarouge.

Pour déterminer le taux de kaolinite, un modèle chimiométrique a été construit en associant des spectres à des valeurs de référence. Ce modèle permet de déterminer une équation mathématique associant un facteur à chaque longueur d'onde du spectre d'absorption. Certaines bandes d'absorption sont plus spécifiques à certaines molécules que d'autres. C'est le cas des longueurs d'onde à 7000 cm$^{-1}$ = 1400 nm et 4500 cm$^{-1}$ = 2200 nm comme expliqué par Maxime Pineau et coll. (Estimating kaolinite crystallinity using near-infrared spectroscopy: implications for its geology on Earth and Mars Maxime Pineau, Maximilien Mathian, Fabien Baron, Benjamin Rondeau, Laetitia Le Deit, Thierry Allard, Nicolas Mangold).

En effectuant des études en parallèle au laboratoire et en conditions industrielles, les inventeurs ont pu démontrer qu'il existe une bonne corrélation entre la valeur de kaolinite indiquée sur le spectromètre proche infrarouge et la teneur de kaolinite calculée à partir des analyses par spectroscopie de fluorescence X (notamment obtention d'un bon coefficient de corrélation $R^2$ égal à 0,882).

L'étape de mesure de la teneur en kaolinite effectuée par spectrométrie proche infrarouge est effectuée sur une gamme de longueurs d'onde allant de 800 nm à 2 500 nm, de préférence de 900 nm à 2 300 nm, notamment de 1 300 nm à 2 200 nm, de préférence 1 350 nm à 1 700 nm, particulièrement de 1 400 nm à 1 500 nm, et préférentiellement sur une bande située à 1 420 nm.

Selon un mode de réalisation préféré, l'étape de mesure de la teneur en kaolinite du procédé de l'invention est effectuée en continu.

Cette étape de mesure peut comprendre la mise en œuvre d'un spectromètre proche infrarouge.

Par exemple, le spectromètre proche infrarouge est notamment monté sur la canalisation par laquelle circule la composition aqueuse d'eaux de lavage susmentionnée. Ce capteur est un instrument optique destiné à suivre en continu la concentration en kaolinite des boues de lavage des granulats. Le flux de matière qui passe devant une lentille et la lampe, absorbe et réfléchit la lumière sur tout le spectre des longueurs d'onde en fonction de sa composition chimique. Le signal réfléchi par l'échantillon est enregistré et analysé par un spectromètre. L'interaction entre l'échantillon et la lumière produit un spectre caractéristique. Les séquences de données sont transférées à un ordinateur via une interface. Un logiciel compare la courbe de la séquence de données avec le modèle de calibration et détermine la teneur en kaolinite de l'échantillon.

Selon l'invention, le procédé de traitement des eaux de lavage comprend des étapes ultérieures ou non, après l'étape de mesure susmentionnée, selon les valeurs mesurées. Ainsi, si la teneur en kaolinite mesurée est inférieure à 10% massique, de préférence inférieure à 8% massique, le procédé de traitement peut être interrompu et les eaux de lavage ne sont pas traitées davantage et sont acheminées via une canalisation dans un bassin adéquat suivant leur chemin habituel. Par contre, si la teneur est supérieure ou égale à 10%, alors les eaux sont déviées vers le traitement ad hoc selon le procédé de l'invention comme décrit ci-dessous.

Selon l'invention, si la teneur mesurée à l'issue de l'étape précédente est supérieure ou égale à 8% massique, de préférence supérieure ou égale à 10% massique, par rapport à la masse totale de la composition aqueuse, le procédé selon l'invention comprend alors une étape supplémentaire de mise en œuvre à la suite de cette étape de mesure, à savoir une étape de filtration de ladite composition aqueuse pour obtenir un gâteau de filtration.

L'étape de filtration selon l'invention peut être mise en œuvre avec un filtre-presse. Ce filtre-presse est un dispositif utilisé pour séparer la fraction solide de l'eau par un processus de filtration.

Un tel filtre-presse peut être composé d'une série de plaques concaves recouvertes de toiles filtrantes, d'un cadre de support, d'un réseau de tuyaux et de canaux pour le transport des boues de lavage des granulats en suspension.

Les particules solides retenues par les toiles filtrantes forment un gâteau dans les chambres situées entre les plaques. Selon un mode de réalisation, des membranes compriment les gâteaux pour abaisser la teneur en eau des gâteaux.

Cette étape de filtration est ensuite suivie d'une étape d'émottage puis de séchage du gâteau de filtration obtenu à l'issue de l'étape de filtration, pour obtenir une charge minérale argilo-silico-calcaire.

Le procédé de l'invention permet d'obtenir une charge minérale argilo-silico-calcaire.

Par « charge argilo-silico-calcaire », on désigne une charge minérale comprenant notamment de l'argile, de la silice et du calcaire.

A l'issue du procédé de l'invention, les charges obtenues sont donc notamment sous forme solide, et plus particulièrement d'une poudre.

Les charges argilo-silico-calcaires ainsi obtenues comprennent donc notamment de l'argile sous diverses formes, du quartz et de la calcédoine, et du calcaire (ou carbonate de calcium).

Selon un mode de réalisation, les charges argilo-silico-calcaires sont sous forme d'une poudre dont la taille de particules est inférieure à 200 $\mu$m.

Par taille de particules, on entend notamment le diamètre moyen desdites particules.

De préférence, la taille de particules de cette poudre est caractérisée par le $d_{50}$ et/ou par le $d_{90}$.

Les valeurs de $d_{50}$ et/ou $d_{90}$ sont notamment mesurées par granulométrie à diffraction laser qui utilise le principe de diffraction et de diffusion d'un faisceau laser frappant une particule en voie liquide ou en voie sèche. Les valeurs de $d_{50}$ et/ou $d_{90}$ indiquent que 50% et/ou 90% des particules ont une taille inférieure à ces valeurs de $d_{50}$ et/ou $d_{90}$

Le $d_{50}$ des particules de la poudre susmentionnée est de préférence inférieur à 50 $\mu$m, voire encore inférieur à 40 $\mu$m, ou même inférieur à 35 $\mu$m. De préférence, le $d_{50}$ est compris de 5 à 15 $\mu$m. Ces valeurs de $d_{50}$ indiquent que 50% des particules ont une taille inférieure à ces valeurs de $d_{50}$.

Le $d_{90}$ des particules de la poudre susmentionnée est de préférence inférieur à 200 $\mu$m, préférentiellement inférieur à 180 $\mu$m, et de préférence supérieur à 20 $\mu$m, voire supérieur à 30 $\mu$m, et préférentiellement supérieur à 35 $\mu$m. De préférence, le $d_{90}$ est compris de 20 $\mu$m à 75 $\mu$m, notamment de 20 $\mu$m à 50 $\mu$m. Ces valeurs de $d_{90}$ indiquent que 90% des particules ont une taille inférieure à ces valeurs de $d_{90}$.

Les charges argilo-silico-calcaires obtenues par le procédé de l'invention comprennent de la kaolinite, et donc comme indiqué plus haut en une teneur supérieure ou égale à 8% massique, de préférence supérieure ou égale à 10% massique par rapport à la masse totale desdites charges.

Selon un mode de réalisation, la teneur en kaolinite dans les charges argilo-silico-calcaires mises en oeuvre dans le procédé de l'invention est inférieure à 25%, voire inférieure à 22%, massique par rapport à la masse totale desdites charges.

De préférence, les charges argilo-silico-calcaires mises en oeuvre dans le procédé de l'invention comprennent de 10% à 30%, de préférence de 10% à 25%, de préférence de 10% à 22%, massique de kaolinite par rapport à la masse totale desdites charges.

Les charges argilo-silico-calcaires obtenues selon le procédé de l'invention peuvent également comprendre de la silice. De préférence, la silice est sous forme d'argiles.

La teneur en silice est notamment mesurée par spectrométrie de fluorescence des rayons X. Cette technique analytique permet d'obtenir des analyses quantitatives élémentaires.

Selon un mode de réalisation, les charges argilo-silico-calcaires mises en œuvre dans le procédé de l'invention comprennent de 5% à 35% massique de silice par rapport à la masse totale desdites charges argilo-silico-calcaires.

De préférence, les charges argilo-silico-calcaires mises en œuvre dans le procédé de l'invention comprennent plus de 8%, notamment plus de 10%, de préférence plus de 15% massique de silice par rapport à la masse totale desdites charges.

De préférence, les charges argilo-silico-calcaires mises en œuvre dans le procédé de l'invention comprennent de 5% à 40%, notamment de 8% à 36%, et de préférence de 15% à 30%, préférentiellement de 15% à 25%, massique de silice par rapport à la masse totale desdites charges.

Les charges argilo-silico-calcaires mises en œuvre dans le procédé de l'invention peuvent également comprendre de l'alumine ou $Al_2O_3$.

La teneur en alumine est notamment mesurée par spectrométrie de fluorescence des rayons X. Cette technique analytique permet d'obtenir des analyses quantitatives élémentaires.

Selon un mode de réalisation, les charges argilo-silico-calcaires comprennent de 1% à 20%, notamment de 3% à 15%, de préférence de 6,5% à 15%, voire de 6,5% à 10%, massique de $Al_2O_3$ par rapport à la masse totale desdites charges.

De préférence, les charges argilo-silico-calcaires comprennent plus de 3%, de préférence plus de 6,5%, massique de $Al_2O_3$ par rapport à la masse totale desdites charges.

En particulier, les charges argilo-silico-calcaires comprennent de 6,6% à 14,6% massique de $Al_2O_3$ par rapport à

la masse totale desdites charges argilo-silico-calcaires.

Les charges argilo-silico-calcaires obtenues selon le procédé de l'invention peuvent également comprendre du calcaire.

La teneur en calcaire est notamment estimée à partir de l'analyse chimique mesurée par spectroscopie à fluorescence X, selon l'équation :

-

$$\% \text{ Calcite } CaCO_3 = (\% \text{ CaO} - \% \text{ Dolomite} * 56 / 184) * 100 / 56$$

Avec :

M(CaO) = 56 g/mol
M(CaCO$_3$) = 100 g/mol
% Dolomite CaMg(CO$_3$)$_2$ = % MgO * 184 / 40
M(MgO) = 40 g/mol
M(CaMg(CO$_3$)$_2$)= 184 g/mol

De préférence, les charges argilo-silico-calcaires comprennent plus de 30%, de préférence plus de 34%, notamment plus de 45% même encore plus de 50%, de préférence plus de 55%, et préférentiellement plus de 56%, massique de calcaire (ou carbonate de calcium) par rapport à la masse totale desdites charges.

Selon un mode de réalisation, les charges argilo-silico-calcaires comprennent de 25% à 85%, notamment de 30% à 70%, de préférence de 35% à 65%, et préférentiellement de 45% à 60%, ou encore de 35% à 62%, massique de calcaire par rapport à la masse totale desdites charges.

En particulier, les charges argilo-silico-calcaires comprennent de 30% à 81%, notamment de 34% à 67%, et de préférence de 34% à 56%, massique de calcaire par rapport à la masse totale desdites charges.

Selon un mode de réalisation du procédé de l'invention, la charge minérale argilo-silico-calcaire obtenue comprend :

- de 8% à 45%, notamment de 12% à 40%, et de préférence de 15% à 36%, massique de SiO$_2$ par rapport à la masse totale de ladite composition,
- de 1% à 20%, notamment de 3% à 15%, et de préférence de 6,5% à 15%, massique de Al$_2$O$_3$ par rapport à la masse totale de ladite composition, et
- de 25% à 85%, notamment de 30% à 81%, notamment de 34% à 70%, et de préférence de 35% à 62%, massique de calcaire par rapport à la masse totale de ladite composition.

La présente invention concerne également un procédé de préparation d'une composition d'argile calcinée, comprenant les étapes suivantes :

- une étape de préparation d'une charge minérale argilo-silico-calcaire selon le procédé tel que défini ci-dessus, et
- une étape de flash calcination de la charge argilo-silico-calcaire obtenue à l'étape précédente, ladite étape de flash calcination étant effectuée à une température comprise de 650°C à 820°C.

Le traitement thermique spécifique mis en oeuvre selon le procédé de préparation d'une composition d'argile calcinée selon l'invention est une calcination avec un temps de traitement très court, à savoir une flash calcination. La technologie de flash calcination est une technologie bien connue de l'homme du métier, qui permet de calciner des particules fines dans des gaz chauds pendant un temps de séjour très court, plus particulièrement de l'ordre de la seconde.

Comme indiqué plus haut, la spécificité du procédé de l'invention est liée une température comprise de 650°C à 820°C. Cette gamme spécifique permet d'obtenir une composition d'argile calcinée.

De préférence, l'étape de flash calcination est effectuée à une température comprise de 675°C à 790°C, et de préférence de 675°C à 740°C.

La présente invention permet donc de « recycler » des produits obtenus de boues de lavage notamment chargées en argile et calcaire, et qui étaient stockées dans des bassins, comme expliqué plus haut, pour obtenir une composition d'argile calcinée.

Par « argile calcinée », on entend une argile qui a subi un traitement thermique permettant sa déshydroxylation de façon à lui donner une réactivité pouzzolanique. Les argiles calcinées regroupent un ensemble de produits aux caractéristiques très variables (métakaolins, méta-illites, méta-palygorskite, mélanges de phases argileuses...). Lorsqu'elles sont calcinées entre 700°C et 850°C, certaines argiles présentent des propriétés pouzzolaniques recherchées pour une utilisation dans les bétons c'est-à-dire qu'elles ont la capacité de former à température ordinaire, en présence d'eau, par combinaison avec la chaux, des hydrates stables aux propriétés liantes. D'après la norme NF EN 197-1, les argiles calcinées sont composées essentiellement de dioxyde de silicium ($SiO_2$) réactif et d'oxyde d'aluminium ($Al_2O_3$). La partie restante contient de l'oxyde de fer ($Fe_2O_3$) et d'autres oxydes. La proportion de CaO réactif est négligeable pour le durcissement.

La calcination permet de modifier les propriétés des argiles et de leur conférer un caractère pouzzolanique. Elle permet le passage d'un état cristallisé stable à un état amorphe instable et donc plus réactif.

Globalement, les argiles calcinées présentent une empreinte carbone très intéressante (entre 139 et 239 kg eq $CO_2$/tonne). En fait, les argiles ne libèrent pas de carbone lorsqu'elles sont chauffées, contrairement au calcaire, et elles sont calcinées à une température beaucoup plus basse par rapport à la fabrication d'un clinker, ce qui réduit la quantité de combustible nécessaire et les émissions qui en résultent. Les liants intégrant des argiles calcinées pourraient ainsi baisser d'environ 30 % le bilan carbone du ciment portland tout en conservant ses performances mécaniques.

Le procédé de l'invention permet d'obtenir une argile calcinée non normée, présentant une réactivité similaire à un métakaolin.

Le métakaolin résulte de la calcination d'une argile, la kaolinite, associée à différents minéraux (phyllosilicates, quartz, oxydes de fer) en proportions variables suivant les gisements. Il est obtenu soit par calcination puis broyage soit par broyage puis calcination, par exemple dans des unités de production à fours rotatifs, à plateaux ou par calcination dite «flash». Il est essentiellement composé de particules de silicate d'alumine amorphe. Du fait de son pouvoir pouzzolanique, il peut être incorporé dans des formulations de bétons et/ou de liants.

Le métakaolin est constitué principalement de particules de silicate d'alumine amorphes ayant des propriétés pouzzolaniques, et il est composé essentiellement de silice $SiO_2$ et alumine $Al_2O_3$ réactif. Les températures de calcination sont comprises entre 600°C et 850°C suivant le degré d'ordre de la kaolinite. Il se produit une réaction de déshydroxylation du matériau avec une destruction de la structure cristalline initiale conduisant à une nature amorphe du matériau.

De préférence, la composition d'argile calcinée obtenue par le procédé susmentionné comprend moins de 90% en masse de silice et alumine par rapport à la masse de ladite composition. Selon un mode de réalisation préféré, la teneur massique de silice et alumine dans la composition d'argile calcinée est comprise de 20% à 60%, et de préférence de 25% à 50%, par rapport à la masse totale de ladite composition.

Selon un mode de réalisation, la composition d'argile calcinée obtenue comprend de 10% à 40%, de préférence de 20% à 35%, notamment de 20% à 25%, et préférentiellement de 16% à 25% massique de $SiO_2$ par rapport à la masse totale de ladite composition.

De préférence, la composition d'argile calcinée obtenue comprend de 5% à 15%, de préférence de 8% à 14% massique de $Al_2O_3$ par rapport à la masse totale de ladite composition.

Les teneurs mentionnées ci-dessus pour la composition d'argile calcinée sont mesurées selon les protocoles mentionnés plus haut.

## EXEMPLES

### Exemple 1 : Mesure de la teneur en kaolinite dans les boues de lavage

La technique de spectroscopie en proche infrarouge est basée sur la vibration des molécules lors de l'excitation de celles-ci par la source infrarouge. Un spectromètre par proche infrarouge est installé sur la conduite dans laquelle circulent les boues de lavage. Une énergie lumineuse traverse la boue de lavage pour ensuite être analysée par un détecteur.

Pour déterminer le taux de kaolinite, un modèle chimiométrique a été construit en associant des spectres à des valeurs de référence. Ce modèle permet de déterminer une équation mathématique associant un facteur à chaque longueur d'onde du spectre d'absorption. Certaines bandes d'absorption sont plus spécifiques à certaines molécules que d'autres. C'est le cas des longueurs d'onde à 7000 $cm^{-1}$ = 1400 nm et 4500 $cm^{-1}$ = 2200 nm comme expliqué par Maxime Pineau et coll. (Estimating kaolinite crystallinity using near-infrared spectroscopy: implications for its geology on Earth and Mars Maxime Pineau, Maximilien Mathian, Fabien Baron, Benjamin Rondeau, Laetitia Le Deit, Thierry Allard, Nicolas Mangold).

Les valeurs de référence de kaolinite sont déterminées à l'aide de l'analyse par fluorescence X et d'un modèle mathématique construit sur des données de diffraction des rayons X selon les équations :

$$\% \text{ kaolinite} = (\% \ Al_2O_3 - \% \ \text{illite} * 102 * 3 / 796) * 258 / 102$$

$$\% \text{ illite} = \% \ K_2O * 796 / 94$$

Avec,

pour l'illite, M(3(Al$_2$O$_3$) 6(SiO$_2$) (K$_2$O) 2(H$_2$O)) = 796 g/mol
Pour la kaolinite, M((Al$_2$O$_3$) 2(SiO$_2$) 2(H$_2$O)) = 258 g/mol
Et M(K$_2$O) = 94 g/mol
M(Al$_2$O$_3$) = 102 g/mol

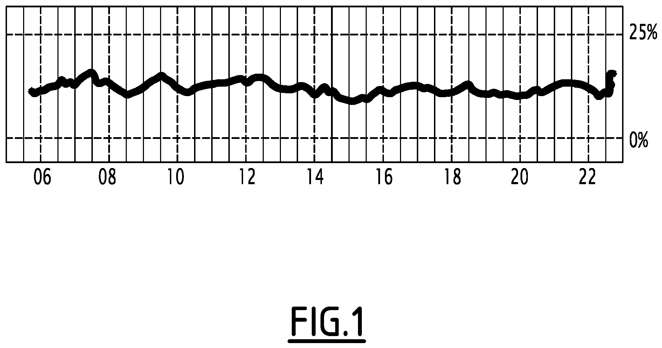

[Fig 1] La figure 1 représente le suivi de la teneur en kaolinite en continu.

Le tableau 1 ci-après détaille l'analyse chimique et l'analyse minéralogique le même jour au cours du temps.

[Tableau 1]

| | | 09h00 | 10h54 | 14h02 | 15h23 |
|---|---|---|---|---|---|
| analyse chimique (par fluorescence X) | SiO$_2$ (%) | 15.15 | 20.16 | 16.68 | 18.28 |
| | Al$_2$O$_3$ (%) | 7.18 | 9.19 | 6.76 | 6.42 |
| | Fe$_2$O$_3$ (%) | 1.83 | 1.96 | 2.39 | 2.69 |
| | CaO (%) | 36.94 | 32.80 | 34.81 | 34.97 |
| | MgO (%) | 0.80 | 0.75 | 1.17 | 1.09 |
| | MnO (%) | 0.03 | 0.04 | 0.04 | 0.04 |
| | Na$_2$O (%) | 0.05 | 0.08 | 0.07 | 0.05 |
| | K$_2$O (%) | 0.79 | 1.14 | 0.85 | 0.85 |
| | P$_2$O$_5$ (%) | 0.15 | 0.11 | 0.13 | 0.14 |
| | TiO$_2$ (%) | 0.37 | 0.50 | 0.35 | 0.33 |
| | S (%) | 0.04 | 0.03 | 0.08 | 0.13 |
| | Σ chimie | 98.30 | 98.90 | 99.00 | 98.70 |
| | PAF | 34.87 | 31.97 | 33.59 | 33.64 |
| minéralogie (basée sur analyse chimique et diffraction des rayons X) | % kaolinite | 11.6 | 13.8 | 10.1 | 9.3 |
| | % illite | 7 | 10 | 7 | 7 |
| | % quartz | 7 | 9 | 9 | 11 |
| | % carbonate de calcium | 64 | 57 | 59 | 60 |
| | % dolomie | 4 | 3 | 5 | 5 |
| | % goethite | 2 | 2 | 3 | 3 |
| | % Rutile + anatase | 0.4 | 0.5 | 0.4 | 0.3 |

Des prélèvements effectués à différents moments confirment la bonne corrélation du suivi de la kaolinite via le spectromètre proche infrarouge avec la quantification de la kaolinite par fluorescence X couplée à la diffraction des rayons X.

Le tableau 2 ci-dessous indique des exemples de correspondance entre la mesure par spectromètre proche infrarouge et les résultats laboratoire pour une même journée.

[Tableau 2]

| | % kaolinite | |
|---|---|---|
| Heure de prélèvement | Proche infrarouge | Minéralogie (FX+DX) |
| 09h00 | 12.2 | 11.6 |
| 10h54 | 12.9 | 13.8 |
| 14h02 | 10.2 | 10.1 |
| 15h23 | 9.5 | 9.3 |

Ces 4 résultats sont des exemples parmi les 89 prélèvements qui ont été effectués et qui ont permis l'établissement d'une droite d'étalonnage avec un bon coefficient de corrélation (R$^2$ de 0.882).

## Exemple 2 : Procédé de préparation d'une charge minérale argilo-silico-calcaire

Certains matériaux extraits de la carrière nécessitent d'être lavés. Ce lavage de granulats entraine la formation de boues chargées en fines argilo-calcaires. Un procédé industriel permet de récupérer les granulats propres d'un côté et les boues de lavage de l'autre. La sélection des boues de lavage avant l'étape de filtration est faite par spectroscopie en proche infrarouge.

*Etape de filtration*

Le filtre-presse utilisé est un dispositif permettant de séparer la fraction solide de l'eau par un processus de filtration.

Il se compose d'une série de plaques concaves recouvertes de toiles filtrantes, d'un cadre de support, d'un réseau de tuyaux et de canaux pour le transport des boues de lavage des granulats en suspension, ainsi que d'une série d'options permettant d'optimiser son fonctionnement (pompe de gavage et membranes de compression...).

La composition aqueuse d'eaux de lavage est introduite dans le filtre-presse avec une concentration de la suspension pouvant varier de 350 g/l à 780 g/l. Elle remplit les chambres et, lorsque les espaces entre les plaques se remplissent, le liquide passe à travers les toiles filtrantes en retenant les particules solides.

Une fois les chambres remplies, la pression constamment appliquée à cette boue lui permet de se filtrer elle-même. Cette pression peut être obtenue à l'aide d'une pompes centrifuges ou pneumatiques.

Le liquide qui passe à travers les toiles, également appelé filtrat, est collecté pour recyclage et réutilisation in fine dans le procédé de lavage des granulats. Les particules solides retenues par les toiles filtrantes forment un gâteau dans les chambres situées entre les plaques.

Des membranes compriment les gâteaux pour abaisser la teneur en eau des gâteaux.

L'humidité exprimée sur masse sèche du gâteau peut être comprise entre 17% et 24%.

*Etape d'émottage*

L'étape de filtration est ensuite suivie d'une étape d'émottage puis de séchage du gâteau de filtration obtenu à l'issue de l'étape de filtration, pour obtenir une charge minérale argilo-silico-calcaire.

L'émotteur est utilisé pour fragmenter les gâteaux de filtration en morceaux inférieurs à 40 mm. En un seul procédé, le sécheur-désagglomérateur permet la désagglomération et le séchage de gâteaux de filtration jusqu'à l'obtention d'une poudre argilo-silico-calcaire de granulométrie identique à celle des boues de lavage.

Le sécheur-désagglomérateur utilisé est appliqué à un produit présentant une humidité exprimée sur masse sèche du gâteau de 17% et le produit obtenu à l'issue du procédé (et donc après séchage) présente une humidité de l'ordre de 0,5%.

## Exemple 3 : Procédé de préparation d'argile calcinée

Une charge minérale argilo-silico-calcaire obtenue à l'exemple 2 est mise en oeuvre dans cet exemple. Elle présente la composition suivante : 12% de kaolinite, 13% illite, 13% quartz, 48% de carbonate de calcium - 24,9% $SiO_2$, 10,1% $Al_2O_3$, 28,7% CaO.

Cette charge a tout d'abord été pressée via un filtre presse (pression de gavage de 6 bars et pression de membranes de 15 bars). Puis elle a été séchée dans un sécheur désagglomérateur et enfin a été flashcalcinée à plusieurs températures de façon à produire une argile calcinée.

La température de 700°C a permis d'obtenir un matériau pouzzolanique avec les caractéristiques suivantes :

- $SiO_2$ = 28,4%
- Silice réactive = 18%
- $Al_2O_3$ = 11,5 %
- MBf = 4 g/kg
- PaF à 1000°C = 23.3 %
- CaO libre selon NF EN 451-1= 3.7%
- Indice d'activité à 28 jours pour une substitution de 15% = 88%

La perte au feu (PaF) est une différence de masse qui résulte du traitement thermique de l'échantillon en atmosphère oxydante à 1000°C.

L'essai au bleu de méthylène (NF EN 933-9+A1)(MBf) permet d'évaluer la fraction argileuse contenue dans le produit avant et après calcination. L'essai au bleu consiste à déterminer la quantité de bleu de méthylène nécessaire pour recouvrir d'une couche mono moléculaire la surface totale (externe + interne) des particules argileuses en suspension dans l'eau. La valeur de bleu représente la quantité de bleu en grammes adsorbée par kilogramme de produit lorsque le test à la tache est positif.

Par « chaux libre », on entend la chaux non liée sous forme d'oxyde de calcium et hydroxyde de calcium. Cette teneur peut être mesurée par différentes techniques par exemple ici elle est extraite à l'aide d'ester acétylacétique et l'extrait est titré avec de l'acide chlorhydrique, du bleu de bromophénol étant utilisé comme indicateur.

Selon la norme NF EN 197-1, la teneur en dioxyde de silicium réactif (SiO2) correspond à la proportion de dioxyde de silice soluble après traitement dans l'acide chlorhydrique (HCl) et dans une solution en ébullition d'hydroxyde de potassium (KOH). La quantité de dioxyde de silice réactif est déterminée en retranchant de la teneur totale en dioxyde de silice (cf. EN 196-2) la proportion contenue dans le résidu insoluble dans l'acide chlorhydrique et dans l'hydroxyde de potassium (cf. EN 196-2), toutes deux étant déterminées sur échantillon sec.

L'indice d'activité caractérise la performance de l'argile calcinée lorsqu'elle est utilisée à x% de substitution. Il est exprimé comme le rapport des résistances à la compression d'un mortier constitué de 100-x% de ciment d'essai et x % de pouzzolane naturelle calcinée, et d'un mortier préparé avec du ciment d'essai uniquement.

La température de 720°C a permis d'obtenir un matériau pouzzolanique avec les caractéristiques suivantes :

- $SiO_2$ = 27,8%
- Silice réactive = 15%
- $Al_2O_3$ = 11,5 %
- MBf = 2 g/kg
- PaF à 1000°C = 24.8 %
- Indice d'activité à 28 jours pour une substitution de 15% = 90%

## Exemple 4 (comparatif)

La technique par spectrocolorimétrie (mesures de L*a*b) a également été étudiée sur les eaux de lavage et sur les eaux de lavage après filtration, séchage et broyage.

Le spectrophotomètre analyse la lumière réfléchie ou transmise par un échantillon à chaque longueur d'onde dans le spectre visible entre 400 et 700 nm, par rapport à celle d'un échantillon de référence. Il est équipé d'un dispositif, en général un élément de diffraction, qui fractionne la lumière incidente en longueurs d'onde individuelles. Le spectrophotomètre mesure la fraction de lumière réfléchie/transmise par l'objet à chaque longueur d'onde du spectre.

La notion de couleur est donc bien associée à la longueur d'onde. La colorimétrie peut être le moyen technique d'associer des chiffres à la couleur d'un échantillon de fines argilo-silico-calcaires en liquide ou en solide.

Le système utilisé a été conçu pour permettre de repérer une couleur dans un espace en trois dimensions : l'espace colorimétrique. Cet espace permet de calculer les différences entre deux ou plusieurs couleurs.

Dans ce système, chaque couleur peut être repérée par ses coordonnées rectangulaires. Les coordonnées rectangulaires L* a* b* où

- L* représente l'axe de clarté
- a* représente l'axe Rouge /Vert
- b* représente l'axe Jaune /Bleu.

L'axe de clarté L* est perpendiculaire au plan chromatique et passe par le point de rencontre des axes a* et b*. La valeur L* varie de 0 (noir) à 100 (blanc). Entre les deux, se trouvent toutes les valeurs de gris. Les valeurs L*, a* et b* permettent de quantifier la couleur.

Quels que soient les paramètres évalués aucune corrélation entre les valeurs de L, a*, b* et les valeurs de % $Al_2O_3$, %$SiO_2$ et %kaolinite n'a pu être démontrée. En effet, la meilleure corrélation est donnée par le suivi du L en fonction du %kaolinite (coefficient de corrélation $R^2$ de 0.34), valeur très inférieure au $R^2$ obtenu avec le spectromètre proche infrarouge.

En conclusion, trop de bons passent mauvais et le coefficient $R^2$ de 0,34 était nettement moins bon que celui donné par le spectromètre proche infrarouge.

Cette technique ne permet donc pas de donner de résultats satisfaisants.

## Revendications

**1.** Procédé de préparation d'une charge minérale argilo-silico-calcaire, comprenant les étapes suivantes :

- une étape de mesure de la teneur en kaolinite dans une composition aqueuse d'eaux de lavage issues de procédés de lavage de matières minérales, notamment issues de procédés de lavage de matériaux calcaires, ladite étape étant **caractérisée en ce qu'**elle est effectuée par spectrométrie proche infrarouge ;
- une étape de filtration de ladite composition aqueuse, si la teneur mesurée à l'étape précédente est supérieure ou égale à 8%, de préférence supérieure ou égale à 10%, massique par rapport à la masse totale de ladite composition aqueuse, pour obtenir un gâteau de filtration ; et

- une étape d'émottage puis de séchage du gâteau de filtration obtenu à l'issue de l'étape de filtration, pour obtenir une charge minérale argilo-silico-calcaire.

2. Procédé de préparation selon la revendication 1, dans lequel l'étape de mesure est effectuée en continu.

3. Procédé de préparation selon la revendication 1 ou 2, dans lequel la composition aqueuse d'eaux de lavage présente une concentration en matières solides comprise de 100 g.L$^{-1}$ à 800 g.L$^{-1}$, de préférence de 110 g.L$^{-1}$ à 780 g.L$^{-1}$.

4. Procédé de préparation selon l'une quelconque des revendications 1 à 3, dans lequel la charge minérale argilo-silico-calcaire est sous forme d'une poudre dont la taille de particules est inférieure à 200 $\mu$m.

5. Procédé de préparation selon l'une quelconque des revendications 1 à 4, dans lequel la charge minérale argilo-silico-calcaire obtenue comprend :

- de 8% à 45%, notamment de 12% à 40%, et de préférence de 15% à 36%, massique de $SiO_2$ par rapport à la masse totale de ladite composition,
- de 1% à 20%, notamment de 3% à 15%, et de préférence de 6,5% à 15%, massique de $Al_2O_3$ par rapport à la masse totale de ladite composition, et
- de 25% à 85%, notamment de 30% à 81%, notamment de 34% à 70%, et de préférence de 35% à 62%, massique de calcaire par rapport à la masse totale de ladite composition.

6. Procédé de préparation d'une composition d'argile calcinée, comprenant les étapes suivantes :

- une étape de préparation d'une charge minérale argilo-silico-calcaire selon le procédé tel que défini dans l'une quelconque des revendications 1 à 5, et
- une étape de flash calcination de la charge argilo-silico-calcaire obtenue à l'étape précédente, ladite étape de flash calcination étant effectuée à une température comprise de 650°C à 820°C, notamment de 675°C à 790°C, et de préférence de 675°C à 740°C.

7. Procédé de préparation selon la revendication 6, dans lequel la composition d'argile calcinée obtenue comprend moins de 90% en masse de silice et alumine par rapport à la masse de ladite composition.

8. Procédé de préparation selon la revendication 6 ou 7, dans lequel la composition d'argile calcinée obtenue comprend de 10% à 40%, de préférence de 20% à 35%, notamment de 20% à 25%, et préférentiellement de 16% à 25% massique de $SiO_2$ par rapport à la masse totale de ladite composition.

9. Procédé de préparation selon l'une quelconque des revendications 6 à 8, dans lequel la composition d'argile calcinée obtenue comprend de 5% à 15%, de préférence de 8% à 14% massique de $Al_2O_3$ par rapport à la masse totale de ladite composition.

# FIG.1

**Europäisches Patentamt**
**European Patent Office**
**Office européen des brevets**

## RAPPORT DE RECHERCHE EUROPEENNE

Numéro de la demande

EP 25 16 9973

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Maier Matthias ET AL: "Potential of Calcined Recycling Kaolin from Silica Sand Processing as Supplementary Cementitious Material : Proceedings of the 3rd International Conference on Calcined Clays for Sustainable Concrete" In: "Strain-Hardening Cement-Based Composites", 1 janvier 2020 (2020-01-01), Springer Netherlands, Dordrecht, XP055908956, ISSN: 2211-0844 ISBN: 978-94-024-1194-2 vol. 25, pages 75-83, DOI: 10.1007/978-981-15-2806-4_9, Extrait de l'Internet: URL:http://athene-forschung.unibw.de/doc/133753/133753.pdf> * le document en entier * - - - - - | 1-9 | INV. C04B7/12 |
| A | ROUSSEAUX JM: "Quantitative Estimation of Kaolinite in Sediments by Differential Infrared Spectroscopy", CLAYS CLAY MINER., vol. 26, 1 janvier 1978 (1978-01-01), pages 202-208, XP093249739, DOI: https://doi.org/10.1346/CCMN.1978.0260303 * le document en entier * - - - - - | 1-9 | DOMAINES TECHNIQUES RECHERCHES (IPC) C04B |

Le présent rapport a été établi pour toutes les revendications

| Lieu de la recherche | Date d'achèvement de la recherche | Examinateur |
|---|---|---|
| Munich | 4 juillet 2025 | Roesky, Rainer |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P04C02)